# EUROPEAN PATENT APPLICATION

(11) **EP 3 591 598 A1**
(43) Date of publication of application: **08.01.2020**
(21) Application number: 18181054.0
(22) Date of filing: 01.07.2018
(51) Int. Cl.: G06Q 10/10, G06Q 50/10, A47J 36/32

(54) **METHOD FOR PROVIDING INFORMATION TO A USER OF A HOUSEHOLD APPLIANCE, DEVICE FOR PROVIDING INFORMATION TO A USER OF A HOUSEHOLD APPLIANCE AND SOFTWARE PROGRAM PRODUCT**

(71) Applicant: ELECTROLUX APPLIANCES AKTIEBOLAG, 105 45 Stockholm (SE)
(72) Inventor: KRAUßE, Constantin, 91541 Rothenburg o. d. Tauber (DE); TISSELLI, Filippo, 47100 Forli (IT); SCHMIDT, Gunnar, 90471 Nürnberg (DE)
(74) Representative: Electrolux Group Patents

(57) **Abstract**

Disclosed are a method and a device for providing information to a user (3) of a household appliance, in particular a cooking appliance. The information is adapted to guide the user (3) in the preparation of items to be treated with the household appliance, in particular of food items or meals to be cooked with the cooking appliance. The guidance in the preparation comprises at least two information portions, in particular information about a sequence of at least two preparatory steps and/or additional or collateral information allocated or related to the items or to the preparatory process.

With respect to the method, according to the invention at least a first part of the information portions is provided to the user (3) by means of communication means (5, 9), in particular by displaying on a display means (5) or by voice of a vocal guide, wherein the first part is selected based or dependent on the user's individual information requirements or needs.

With respect to the device, according to the invention the device comprising
- information receiving means for receiving the information portions (GR) from an internal or external source (15),
- selection means (17) for selecting at least a first part of the information portions based or dependent on the user's (3) individual information requirements or needs, and
- communication means (5, 9), in particular display means (5) or a vocal guide, for communicating the at least first part to the user (3).

## Description

The present invention relates to a method and to a device for providing information to a user of a household appliance, in particular of a cooking appliance, which information is adapted to guide the user in the preparation of items to be treated with the household appliance, in particular of food items or meals to be cooked with the cooking appliance, wherein the guidance in the preparation comprises at least two information portions, in particular information on a sequence of at least two preparatory steps and/or additional or collateral information allocated or related to the items or to the preparatory process. Further, the invention also relates to a software program product.

### BACKGROUND OF THE INVENTION

Household appliances for multiple use cases are available on the market, which appliances making the life easier for people. These household appliances serve multiple purposes which in particular are cleaning dishes, clothes and floors, preparing or preserving food, etc.. Some of these household appliances require preparation of items by a user before using the appliances or such preparation may improve their work result. In particular, household appliances for cooking food and meals need some food preparation prior to the cooking process. Experienced persons, e. g. housewifes, do such food preparation usually without a need of seeking advice. Only when they intend to perform a new meal creation, they need advice from cookbooks or the like. Such cookbooks commonly provide information about recipes for the preparation of food, e.g. a list of ingredients, how they shall be mixed and in which way to do the cooking process. More elaborate cookbooks provide also additional information, in particular which type of cooking utensils to use or background information about some ingredients.

Nowadays, paperless cookbooks more and more get common. Rather than having a library with a number of cookbooks, for instance for different culinary directions, users are moving to consult digital recipe providers which are easily accessible on the Internet. There is only a need to have a receiver terminal, comprising a display or a monitor, e. g. a smarthphone or a tablet computer.

The information which is provided to the user by the recipe provider follows the above-indicated pattern, with making available the list of ingredients, preparaton and finishing of the meals as well as useful additional information. In order to take care of readers with very low cooking experience, the amount of information, i.e. the level of detailing, must be as high as possible, so that even a cook trainee will be empowered to prepare the meal properly without a need to search for more information in other sources. Other cooks who are more experienced have then to skip passages with too detailed descriptions and are bored or even nerved from the information which is dispensable for them.

The document DE 10 2008 026 481 A1 discloses a cooking appliance which can be individualized, i. e. a customization to a specific one of several users can be executed, comprising also the option to store personal, individually compiled cookbooks. However, in that case the individual user only makes use of personally selected and stored recipes, not trying new meals out. Further, in case of a higher number of individual users, quite a number of recipes needs to be stored several times what requires a big volume of internal storage space.

### SUMMARY OF THE INVENTION

It is an object of the present invention to propose a method and a device for providing information to a user of a household appliance of the initially indicated nature, which provides to the user the information without boring with a level of detail or type of information not needed by this specific user. A further object is to propose a related software program product.

With respect to the method, the problem is solved by at least a first part of the information portions which is provided to the user by means of communication means, and this first part is selected based or dependent on the user's individual information requirement or needs.

Preferred embodiments may be taken from the dependent claims, and, beyond that, from the following description, in particular comprising various embodiments as covered by the annexed claims.

According to a first aspect, a method for providing information to a user of a household appliance is suggested. This information is adapted to guide the user in the preparation of items to be treated with the household appliance and it comprises at least two information portions which may be information about a sequence of at least two preparatory steps and/or additional or collateral information allocated or related to the items or to the preparatory process. According to the present invention, at least a first part of the information portions is provided to the user by means of communication means, which first part is selected based on or dependent on the user's individual information requirements or needs. The communication means may be display means on which the information is disclosed by way of text elements or illustrated with graphical presentation. Also other kind of communication means may be considered, like a vocal guide communicating by way of human voice. The user receives, from the total coverage of available information, only that part thereof which is necessary to the user to perform the preparation of the items without any need to look for further information, e.g. in other sources. On the other hand, no redundant information is communicated which the user does not require.

The household appliance may be a cooking appliance and the preparation of items may be a preparation of food or a meal to be cooked, thus finished with the cooking appliance. In that case, the information to be provided may be a data content of a cookbook, e.g. a recipe for the preparation of a meal, and the user may be a cook or a chef.

Advantageously, the individual information requirements or needs depend on the user's ability to prepare the items to be treated or on the user's acquirement of or experience in the preparation of the items to be treated. The user just receives that level of detail of and/or that type of information that is related to his or her particular level of preparation ability. As regards the example of cooking preparation, adapted to the cook's individual level of cooking ability, from a basic recipe comprising all necessary recipe information portions which an unexperienced cook may require, a first part of information portions may be selected and communicated to the cook during the food preparation process. The cook may be guided through the preparation of the selected recipe in a customized level of detail according to his or her cooking ability. The recipe information portions or details may comprise: selection of cookware, selection of ingredients, suggestions for specific customization of the recipe in terms of additional flavouring ingredients, selection of cooking power and time, etc., which information portions may be partly or completely delivered, as long as required or needed by the cook.

Preferably, the information portions which are communicated to the user are presented step by step with such presentation speed that the user requires for performing the next step of the preparation process. Consequently, the user does not need to wait unnecessarily and can proceed with the subsequent preparation step. Alternatively, the method may comprise the possibility of triggering provision of a subsequent information by a user command.

In a particularly preferred embodiment of the invention, the user's ability or acquirement or experience is a variable calculated or measured by means of at least one parameter which may be one or more of
- recording or calculation of the time needed by the user for completion of a single task or of a procedural step,
- number or frequency of communication by the user, e.g. requests for more information portions by the user during the preparation,
- deletion or suppression of single or certain provisions of information portions by the user,
- in case of a food preparation process, the frequency of not necessarily required power adjustments at the cooking appliance
- frequency of use of the method,
- time lapsed since latest use of the method.

The parameters may be tracked during the preparation process and recorded for performing a first setting, a recalculation or an update of the preparation ability or acquirement or experience. The tracking of data may take place continuously or discretely during the connection with the user or in other manner relating to the use by the user. Also the updating may be performed in a continuous or descrete way. Preferably, the parameters used for the updating are not fix over time but change, in particular their weighting changes. In a particular embodiment the user is enabled to turn on or off individual parameters influencing the experience level adaptation.

Favourably, the level of ability or acquirement or experience is quantified by and/or transferred into a numeric value and/or a proficiency category or level. For a breaking-in process, i.e. when operating the process for the first time, a pre-set level may be defined by the user. To this end, a list of possible choices may be provided to the user who may select one thereof. In case of cooking proficiency, choices may comprise: novel cook, regular cook, pro-cook or chef.

The information about the present level of a user's ability or acquirement or experience may be merely stored for being used as a basis for performing the selection of the first part. Preferably, however, the level of ability or acquirement or experience and/or the change compared with a previous level is provided to the user. This can be a presentation of a numeric value and/or a percentage and/or in terms of a category. Additionally or alternatively, a message or comment may be given in case of a relative improvement of the preparation ability or acquirement or experince so that the user is motivated in further improving his or her performance level. The presentation may be provided at any time during the preparation process or even on request by the user.

There may be a generel level of ability or acquirement or experience allocated to a specific user, which general levels used for whichever preparation process. This may apply also for food preparation process and the same level may be used independently from the meal the cook is preparing. But since the cook may have preferred areas in specific cullinary directions and areas which are not favourite ones to him or her. By way of example, the cook may be very experienced in preparing meat dishes, but did not prepare many vegetarian ones before. It seems to be beneficial, therefore, to link the cook's food preparation or cooking ability or acquirement or experience to the type of food or meal. In that way, the above-described cook with low experience in vegetarian cooking and high knowledge in preparing vegetarian dishes will receive a higher level of detail of recipe information than in the situation when a meal with meat shall be prepared.

Preferably, for each user a user profile is set up. In case of an environment of several users who have to be managed, e.g. people from a same family, a user profile data record may be on hand and the selection of the first part of the information portions may be a retrieval from that data record. In particular, the user profile and, hence, the user profile data may be updated continuously or discretely by tracking data during the connection with the user or in other manner relating to the use by the user. There may be a dynamic chance over time and it increases for instance.

Besides the first part of the information portions which is delivered to the user for the preparation process, a second part of the information portions may be not provided, which second part may be distinguished from the first part by a higher level of detailing. Particularly, this second part is synonymous with the information that is redundant for the user.

According to another advanced embodiment, the first part of the information portion is selected based on the user's character with respect to the user's level of eagerness for experiments. For the example of food preparation, this may include the possibility to provide proposals (e.g. taste proposals), particularly communicating different types of spicery thay can be used for receiving specific taste results. Additionally or alternatively, there may be recipe modifications based on the user's health status, i.e. there may be a substitution of specific ingredients in order to comply with the user's allergy and/or there may be an omission or substitution of ingredients which are rich in calories.

With respect to the device, the problem is solved by the device comprising
- information receiving means for receiving the information portions from an internal or external source,
- selection means for selecting at least a first part of the information portions based or dependent on the user's individual information requirements or needs, and
- communication means, in particular display means or a vocal guide, for communicating the at least first part to the user.

Preferred embodiments for the device may be taken from the dependent claims, and, beyond that, from the following description, in particular comprising various embodiments as covered by the annexed claims.

According to a second aspect, a device for providing information to a user of a household appliance is suggested. This information is adapted to guide the user in the preparation of items to be treated with the household appliance and it comprises at least two information portions which may be information about a sequence of at least two preparatory steps and/or additional or collateral information allocated or related to the items or to the preparatory process. According to the present invention, the device comprises first of all information receiving means for receiving the information portions from an external source. This information receiving means may comprise a software program and a data transfer network, the software program being adapted to download the information from an external source. Secondly, the device comprises selection means for selecting at least a first part of the information portions based or dependent on the user's individual information requirements or needs. This may be also a software program and it may be adapted to filter out from the complete information such information portions not required or needed by the user, hence, selecting only the first part of the information portions which shall be provided to the user. And finally, the device according to the invention comprises communication means, in particular display means or a vocal guide, for communicating the at least first part to the user. On display means the information may be disclosed by text elements or illustrated with graphical presentation. Additionally or alternatively, a vocal guide may communicate the first part by way of human voice. The user receives, from the total coverage of available information, only that part thereof which is necessary to the user to perform the preparation of the items without any need to look for further information, e.g. in other sources. On the other hand, no redundant information is communicated which the user does not require. Besides display means and vocal guide, any other type of communication means can be considered, including other optical or also haptic communication means.

The individual information requirements or needs may depend on the user's ability to prepare the items to be treated or on the user's acquirement of or experience in the preparation of the items to be treated. The user just receives that level of detail and/or that type of information that is related to his or her particular level of preparation ability. For experienced users having already an enhanced ability to prepare the items to be treated, easy tasks may no longer be explained, at least not in a too detailed level, and basic suggestions or hints may be skipped. That way, the time for interaction with the device may be optimized or at least set on a high level. In an advantageous manner, there is no waste of time and no over-assistance which might be annoying for an expert user. The user may receive an improved user experience of the device and the result of the preparation by the user may be improved as well. Such improved motivation may also end up in users to be encouraged to cook healthier, independently of any potential need for them due to healthy problems or just because they want to practise a healthy life-style.

As regards the example of cooking preparation, the information may be a cooking recipe and the external source may be a recipe provider. Adapted to the cook's individual level of cooking ability, from a basic recipe comprising all necessary recipe information portions which an unexperienced cook may require, a first part of information portions may be selected and communicated to the cook during the food preparation process. The recipe or other type of information may be stored in a cloud data storage unit and only temporarily downloaded into a working storage for the period of preparation of the items to be treated with the household appliance. With such kind of external source, no internal memory storage is needed, what can result in saving costs for the device. The downloaded information may be limited only to the first part of the information portion, thus, the selection process takes place before loading into the working storage. Alternatively, also a download of the general recipe comprising all information portions and a subsequent selection process may be feasible.

A preferred embodiment provides input means for an input of commands. With such input means, the user may not only receive information from the device, but may also get into contact with it, e.g. for the possibility of inputting commands. In that way, a bi-directional communication or interaction with the device is arranged. With such interaction, a further improvement in time efficient preparation of items can be realized.

The input means may consist of or comprise a mechanical keyboard and/or touch sensitive display unit for the user to input manually the commands or other type of information. Additionally or alternatively, the device may be equipped with voice or gesture control means. Due to the hands-free interaction which is realizable with such kind of control means, the user is able to continue the preparation process without any disturbance. Furthermore, the user does not soil the device by touching with dirty hands.

A particularly preferable embodiment of the invention is characterized by connection means to a social media platform, like Facebook™, Twitter™, Pinterest™ or the like. The user may share with friends or others on this platform not only the results of the preparation but also the achieved level of preparation ability or acquirement of or experience in the preparation of the items to be treated. Broken down to food preparation, the user or cook may publish the cooking result, e.g. by sharing photos of prepared meals, and also his or her level of cooking proficiency, thereby increasing the fun to use the cook assisting device and the pride of possessing and using it.

Finally, another aspect of the invention is directed to a software program product executing any of the aspects of the method or which may be installed or may be downloadable on a device as described above. This software program product may be implemented in a program control unit of the household appliance, alternatively it can be downloadable on a smart device like smartphone or tablet computer. Alternatively, a hardware implemented version could be considered as well or even a mixture of these alternatives.

### BRIEF DESCRIPTION OF THE DRAWINGS

The present invention will be described in further detail with reference to the drawings from which further features, embodiments and advantages may be taken, and in which:
- FIG 1: illustrates a schematic diagram of a user interacting with a cook assisting device,
- FIG 2: illustrates a simplified connection scheme of a cooking recipe provision function of the cook assisting device of FIG 1, and
- FIG 3: illustrates a simplified diagram of a user profile adjustment function of the cook assisting device of FIG 1.

### DETAILED DESCRIPTION OF PREFERRED EMBODIMENTS

The present invention will now be described more fully with reference to the accompanying drawings, in which example embodiments are shown. However, this invention should not be construed as limiting to the embodiments set forth herein. Throughout the following description similar reference numerals have been used to denote similar elements, parts, items or features, when applicable. It is noted that the figures may not be true to scale with respect to each other.

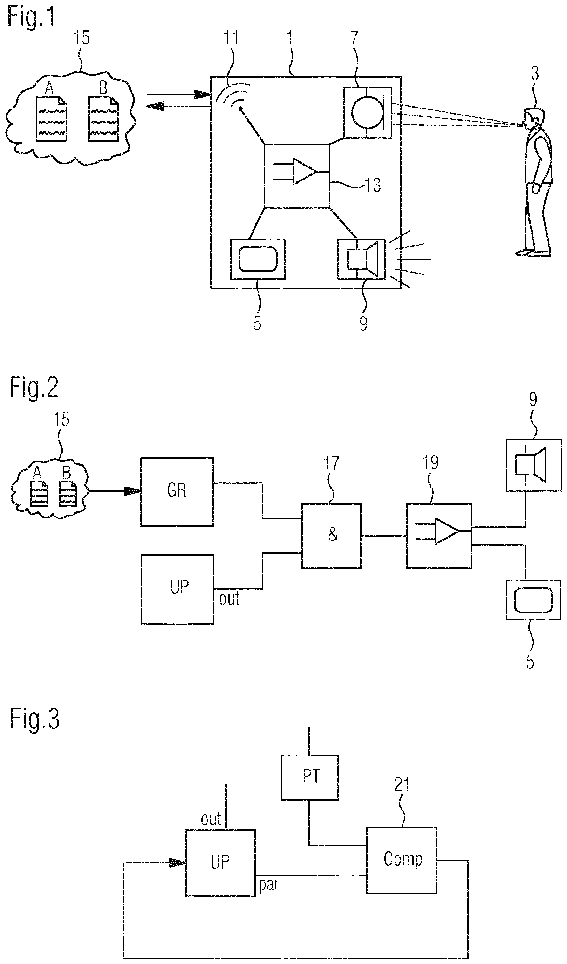

FIG 1 shows a schematic diagram of an interaction of a user 3 with a cook assisting device 1. The cook assisting device 1 is adapted to guide the user 3 through the preparation of a selected cooking recipe B in a customized level of detail, according to the user's cooking ability, as will be described further down in more detail.

A smart device is used as a platform for the cook assisting device 1, what may be a smartphone or a tablet computer. The basic functionalities of the cook assisting device 1 are comprised in a software program which is downloaded onto the smart device. The software program uses the hardware elements of the smart device, in particular a touch screen 5, a microphone 7, a loudspeaker 9, a WLAN connection means 11 and electronic circuits 13, i.a. for driving all other hardware elements.

The user 3 interacts with the cook assisting device 1 mainly by sending vocal commands, but (what is not illustrated in FIG 1) may also use the touch screen 5 as input means. In the other direction, the cook assisting device 1 provides information to the user 3 by way of a vocal output via the loudspeaker 9 and/or textual information and illustrations by means of the screen 5.

Some specific recipes may be stored on a permanent storage in the smart device. Principially, however, the cook assisting device 1 is interacting with external recipe providers in order to receive any requested recipe information. The collectivity of recipe providers, i.e. the external source for recipes, is illustrated by cloud 15, showing recipe A and recipe B as examples for all publicly available or via subscription obtainable cooking recipes.

According to FIG 2, showing a simplified connection scheme of a cooking recipe provision function of the cook assisting device 1, when downloading a recipe information from an external source for recipes 15, a general recipe information GR will be imported. This general recipe information GR comprises all information portions which an unexperienced user, e.g. a novel cook, would need for performing preparation and cooking of the meal described and explained therein. For instance, there may be explained in great detail how exactly to cut vegetables, what kind of meat to make use of, which preparation tools and cookware to take, boiling temperature, etc.. With this amount and type of information, cooking of the respective meal is possible for nearly everyone.

On the other hand, however, with such high detail level, the general recipe information GR comprises a lot of information portions which an at least partly experienced cook does not need. This type of cook may get annoyed by having to read so much redundant information. In addition, the speed for the food preparation is reduced for this cook compared to the situation of receiving only individually necessary information. In order to counteract potential annoyance of an experienced cook, a filter 17 is arranged within the cook assisting device 1 which is adapted to filter out information portions that are redundant for the user 3 receiving the recipe information. The filter operation is adapted to the user's 3 cooking ability. i.e. depending on the user's 3 knowledge and experience in food preparation, the user 3 is provided with the only necessary information portions of the recipe. To this end, the cook assisting device 1 is provided with storage means in which a user profile UP is saved, which user profile UP comprises information about the user's 3 cooking ability. This cooking ability is a filter parameter driving the level of detail to be provided to the user 3, i.e. driving factually the filter process, and delivered to the filter 17 via output terminal out of user profile UP storage.

By way of electronic circuits, i.e. drivers 19, the information portions passing the filter 17 are forwarded to the communication means 5, 9. The user 3 receives the filtered recipe information, mainly through vocal instructions explaining the subsequent preparation step. But for better under standing and for a revision, the instructions are repeated by text and example pictures or photos, in particular illustrating how intermediate shall look like, are shown on the screen 5.

The single information portions within the general recipe information GR may be labeled with markers indicating their respective detail level. Information portions marked with a high detail level won't then pass the filter 17 if the recipe information shall be provided to an at least partly experienced cook.

The cooking ability as lodged in the user profile UP is measured and calculated by various parameters. These parameters in particular are: time calculation for completing a single task or a procedural step, communication rate of the user 3 during the preparation with the device 1, i.e. number or frequency of requests for more information, deletion or suppression of single or certain information provisions by the user 3, frequency of use of the cook assisting device 1, in particular for a specific recipe, time lapsed since latest use of the device 1, etc..

The parameters are continuously tracked and recorded during every single food preparation process and the user's 3 cooking ability is regularly re-calculated and the user profile UP is updated at the end of a single food preparation process, having effect on the subsequent food preparation process, i.e. when using the cook assist and device 1 the next time. Generally, also a permanent updating with immediate effect already for the running process could be considered.

The adjustment function of a user profile UP as stored in the cook assiting device 1 is schematically illustrated with FIG 3. A parameter tracker PT, which may be a parameter tracking function, operates continuously during each single food preparation process with tracking and recording the parameters as described above. The recorded parameters are input data for a comparator device 21, or a comparator circuit, respectively. A second input terminal of the comparator 21 is connected with a parameter terminal *par* of the user profile UP storage, receiving data about currently stored parameters. With such data, stored parameters and actual parameters, re-calculation of the user profile UP takes place. However, as mentioned above, the re-calculated user profile UP will become effective only for the next usage of the cook assisting device 1 and the stored parameters are overwritten with the actual parameters only at the end of the running food preparation process.

The cook assisting device works as will be explained with the following example.

User 3 intends to prepare a "Chilly con carne" meal. In order to be best supported, the user 3 makes use of the afore-described cook assisting device 1.

The user 3 starts the operating process of the cook assisting device 1 by a vocal command "search for recipe ,Chilly con carne'", as schematically indicated in FIG 1. After a preselection of a big number of potential hits, which preselection may be exectuted by the device 1 as well based on further indicators given by the user 3, the cook assisting device 1 proposes two recipes A and B of which the user 3 may select recipe B, communicating to the cook assisting device 1 by vocal input "recipe B".

The recipe information which is downloaded is as follows (Method only in extracts).

### Ingredients

1 tbsp sunflower oil
2 small onions
1 red pepper
1 tsp hot chilli powder
1 tsp paprika
500g minced beef
1 beef stock cube
500g can chopped tomatoes
1 tsp salt
350g red kidney beans

### Method

1. Cut the 2 small onions into fine rings, with about 2 mm thickness. The easiest way to do this is to cut the onion in half from root to tip, peel it and slice each half into the rings, starting with each half from the center plane. Cut 1 red pepper in half lengthways, remove stalk and wash the seeds away, then chop.
2. Put your pan (preferably having 28 cm diameter) on the hob over a high heat initially. When pan bottom is heated, reduce the heat to a medium level and add the oil and leave it for 1-2 minutes until hot (a little shorter for a gas hob). Add the onions and cook, constantly stirring, for about 7 minutes, or until the onions are soft and slightly translucent. Tip in the red pepper, 1 tsp hot chilli powder and 1 tsp paprika. Give it a good stir, then leave it to cook for another 8 minutes, stirring occasionally.

After downloading the recipe information of recipe B via WLAN connection 11, the general recipe information GR of recipe B is stored in the working storage of the cook assisting device 1. If user 3 is a novel cook, the complete information of general recipe GR will be provided to the user in the way as already described above. Optionally, the user 3 may be asked for an indication of his or her cooking ability and may overwrite the pre-selection "novel cook".

In case of a smart user 3 who is performing the preparation rather quickly, also instructing the cook assisting device 1 to skip presentation of specific instructions while performing the preparation, the current user profile UP "novel cook" is updated as described before and the user 3 receives the status "partly experienced cook". When user 3 selects the same recipe, or a similar one with e.g. preparation of minced beef, next time, only the following method steps (in addition to the complete list of ingredients) may be provided to the user 3.

### Method

1. Cut the 2 small onions into fine rings, with about 2mm thickness. Cut 1 red pepper in half lengthways, then chop.
2. Put your pan on the hob over a high heat initially. When pan bottom is heated, reduce the heat to a medium level and add the oil and leave it for 1-2 minutes until hot (a little shorter for a gas hob). Add the onions and cook, constantly stirring, for about 7 minutes, or until the onions are soft and slightly translucent. Tip in the red pepper, 1 tsp hot chilli powder and 1 tsp paprika. Give it a good stir, then leave it to cook for another 8 minutes, stirring occasionally.

With growing experience and increasing cooking ability of the user 3, further reduction of the provided method information will take place. In extreme, a chef of a canteen with a periodic menu, will just receive the list of ingredients, favourably with ingredients amounts calculatable for the expected great quantities.

Generally, the information and guidance is mainly related to the preparation and cooking process, but can also provide additional information exceeding this process, e.g. proper waste management and background knowledge of the ingredients.

At the end of each single food preparation process the user 3 is informed by the cook assisting device 1 about the current status of his or her cooking ability. With a respective software program in the smart device, the user 3 may share this status with friends via WLAN connection 11 and a common social media platform, possibly adding some photos of cooking results. That way, blogger and social media interested people can compare with each other and inspire other people.

### List of reference numerals

- 1: cook assisting device
- 3: user
- 5: touch screen
- 7: microphone
- 9: loudspeaker
- 11: WLAN connection means
- 13: electronic circuits
- 15: cloud / external source for recipes
- 17: filter
- 19: drivers
- 21: comparator
- A, B: recipes
- GR: general recipe information
- UP: user profile
- PT: parameter tracker
- out: output terminal
- par: parameter terminal

## Claims

1. A method for providing information to a user (3) of a household appliance, in particular a cooking appliance, the information being adapted to guide the user (3) in the preparation of items to be treated with the household appliance, in particular of food items or meals to be cooked with the cooking appliance, wherein the guidance in the preparation comprises at least two information portions, in particular information about a sequence of at least two preparatory steps and/or additional or collateral information allocated or related to the items or to the preparatory process, wherein at least a first part of the information portions is provided to the user (3) by means of communication means (5, 9), in particular by displaying on a display means (5) or by voice of a vocal guide, wherein the first part is selected based or dependent on the user's individual information requirements or needs.

2. The method according to claim 1, wherein the individual information requirements or needs depend on the user's ability to prepare the items to be treated or on the user's (3) acquirement of or experience in the preparation of the items to be treated, in particular the user's (3) food preparation or cooking ability or acquirement or experience.

3. The method according to claim 2, wherein the user's (3) ability or acquirement or experience is a variable calculated or measured by means of at least one parameter, in particular by at least one of
- recording or calculation of the time needed by the user for completion of a single task or of a procedural step,
- number or frequency of requests for more information by the user (3) during the preparation,
- deletion or suppression of single or certain information provisions by the user (3)
- frequency of use of the method,
- time lapsed since latest use of the method.

4. The method according to claim 2 or 3, wherein the level of ability or acquirement or experience is quantified by a numeric value and/or a proficiency level or category.

5. The method according to any one of the claims 2 to 4, wherein information about present level of ability or acquirement or experience and/or about change compared with previous level is provided to the user (3).

6. The method according to any one of the claims 2 to 5, wherein the user's (3) food preparation or cooking ability or acquirement or experience is linked to the type of food or meal.

7. The method according to any one of the preceding claims, wherein the selection is made by a retrieval from a user profile (UP) data record, which in particular is continuously or discretely updated by tracking data during the connection with the user (3) or relating to the use by the user (3).

8. The method according to any one of the preceding claims, wherein at least a second part of the information portions is not provided to the user (3) and the second part is distinguished from the first part by a higher level of detailing.

9. The method according to claim 1, wherein the first part is selected based on the user's (3) character with respect to the user's (3) level of eagerness for experiments.

10. A device for providing information to a user (3) of a household appliance, in particular a cooking appliance, the information being adapted to guide the user (3) in the preparation of items to be treated with the household appliance, in particular of food items or meals to be cooked with the cooking appliance, wherein the guidance in the preparation comprises at least two information portions, in particular information on a sequence of at least two preparatory steps and/or additional or collateral information allocated or related to the items or to the preparatory process, the device comprising
- information receiving means for receiving the information portions (GR) from an internal or external source (15),
- selection means (17) for selecting at least a first part of the information portions based or dependent on the user's (3) individual information requirements or needs, and
- communication means (5, 9), in particular display means (5) or a vocal guide, for communicating the at least first part to the user (3).

11. The device according to claim 10, wherein the individual information requirements or needs depend on the user's (3) ability to prepare the items to be treated or on the user's (3) acquirement of or experience in the preparation of the items to be treated, in particular the user's (3) food preparation or cooking ability or acquirement or experience.

12. The device according to claim 10 or 11, wherein the information is a cooking recipe (A, B, GR) and the external source (15) is a recipe provider.

13. The device according to any one of the claims 10 to 12, wherein input means (7) are provided for an input of commands, in particular a mechanical or touch sensitive keybord or voice or gesture control means.

14. The device according to any one of the claims 10 to 13, further comprising connection means to a social media platform for sharing by the user (3) information on the preparation result and/or the achieved level of preparation ability or acquirement or experience in the preparation of the items to be treated.

15. A software program product executing the method according to any one of the claims 1 to 9 and/or downloadable to or installed on a device according to any one of the claims 10 to 14.
